# EUROPEAN PATENT APPLICATION

(11) **EP 3 713 201 A1**
(43) Date of publication of application: **23.09.2020**
(21) Application number: 18896469.6
(22) Date of filing: 30.11.2018
(51) Int. Cl.: H04M 1/725, H04B 1/401

(54) **ANTENNA SWITCHING CIRCUIT, ANTENNA SWITCHING METHOD AND ELECTRONIC DEVICE**

(30) Priority: 29.12.2017 CN 201711489603; 29.12.2017 CN 201721928068 U
(71) Applicant: GUANGDONG OPPO MOBILE TELECOMMUNICATIONS CORP., LTD., Wusha, Chang'an Dongguan, Guangdong 523860 (CN)
(72) Inventor: WU, Qing, Dongguan, Guangdong 523860 (CN); LUO, Yizhou, Dongguan, Guangdong 523860 (CN)
(74) Representative: Manitz Finsterwald Patent- und Rechtsanwaltspartnerschaft mbB
(86) International application number: PCT/CN2018/118510
(87) International publication number: WO 2019/128620

(57) **Abstract**

Disclosed in the embodiments of the present application are an antenna switching circuit, an antenna switching method and an electronic device. The antenna switching circuit comprises a detection device, a controller, a first antenna, a second antenna, a first switch and a radio frequency transceiver. The detection device is used to detect a change in an input impedance of the first antenna and a change in an input impedance of the second antenna; the controller is used to compare the change in the input impedance of the first antenna with the change in the input impedance of the second antenna; the first switch is used to turn on a first radio frequency circuit and turn off a second radio frequency circuit when the change in the input impedance of the first antenna is less than the change in the input impedance of the second antenna, the first radio frequency circuit comprising a circuit between the first antenna and the radio frequency transceiver, the second radio frequency circuit comprising a circuit between the second antenna and the radio frequency transceiver. The embodiments of the present application can improve antenna performance.

## Description

### TECHNICAL FIELD

The present disclosure relates to the field of communication technology, and in particular, to an antenna switching circuit, an antenna switching method, and an electronic device.

### BACKGROUND

At present, an antenna of an electronic device, such as a mobile phone, is generally disposed at a top end or a bottom end of the mobile phone. The antenna is prone to be held in a palm of a hand, which may result in that performance of the antenna becomes worse.

### SUMMARY OF THE DISCLOSURE

Embodiments of the present disclosure provides an antenna switching circuit, an antenna switching method, and an electronic device, which can improve antenna performance.

A first aspect of embodiments of the present disclosure provides an antenna switching circuit applied in an electronic device, the antenna switching circuit comprises a detection device, a controller, a first antenna, a second antenna, a first switch, and a radio frequency transceiver; wherein: the detection device is configured to detect a change value of an input impedance of the first antenna and a change value of an input impedance of the second antenna; the controller is configured to compare the change value of the input impedance of the first antenna with the change value of the input impedance of the second antenna; the first switch is configured to turn on a first radio frequency path and turn off a second radio frequency path when the change value of the input impedance of the first antenna is less than the change value of the input impedance of the second antenna, the first radio frequency path comprises a path between the first antenna and the radio frequency transceiver, the second radio frequency path comprises a path between the second antenna and the radio frequency transceiver.

A second aspect of embodiments of the present disclosure provides an antenna switching method, the antenna switching method is applied to an antenna switching circuit, the antenna switching circuit comprises a detection device, a controller, a first antenna, a second antenna, a first switch, and a radio frequency transceiver; the method comprises: detecting a change value of an input impedance of the first antenna and a change value of an input impedance of the second antenna; comparing the change value of the input impedance of the first antenna with the change value of the input impedance of the second antenna; turning on a first radio frequency path and turning off a second radio frequency path when the change value of the input impedance of the first antenna is less than the change value of the input impedance of the second antenna, wherein the first radio frequency path comprises a path between the first antenna and the radio frequency transceiver, and the second radio frequency path comprises a path between the second antenna and the radio frequency transceiver.

A third aspect of embodiments of the present disclosure provides an electronic device, which comprises a frame, a circuit board, and the antenna switching circuit described in the first aspect of embodiments of the present disclosure.

The antenna switching circuit provided by embodiments of the present disclosure can detect a change value of an input impedance of the first antenna and a change value of an input impedance of the second antenna using the detection device, and when the change value of the input impedance of the first antenna is less than the change value of the input impedance of the second antenna, turn on a first radio frequency path to make the first antenna to work and turn off a second radio frequency path to make the second antenna not to work; wherein, the first radio frequency path comprises a path between the first antenna and the radio frequency transceiver, and the second radio frequency path comprises a path between the second antenna and the radio frequency transceiver. Embodiments of the present disclosure can detect changes of input impedances of antennas using a detection device, switch a currently working antenna to an antenna with higher performance according to the changes of impedances of antennas, and thus can improve performance of a working antenna.

### BRIEF DESCRIPTION OF THE DRAWINGS

In order to describe technical solutions of embodiments of the present disclosure or of the prior art more clearly, drawings required being used in the description of the embodiments or of the prior art will be simply introduced below. Obviously, the drawings in the following description are merely some embodiments of the present disclosure. For one of ordinary skill in the art, it is also possible to obtain other drawings according to these drawings without paying any creative work.
FIG. 1 is a structural schematic view of an antenna switching circuit disclosed by an embodiment of the present disclosure.
FIG. 2 is a structural schematic view of another antenna switching circuit disclosed by an embodiment of the present disclosure.
FIG. 3 is a structural schematic view of another antenna switching circuit disclosed by an embodiment of the present disclosure.
FIG. 4 is a structural schematic view of another antenna switching circuit disclosed by an embodiment of the present disclosure.
FIG. 5 is a structural schematic view of an electronic device disclosed by an embodiment of the present disclosure.
FIG. 6 is a structural schematic view of another electronic device disclosed by an embodiment of the present disclosure.
FIG. 7 is a structural schematic view of another electronic device disclosed by an embodiment of the present disclosure.
FIG. 8 is a schematic flow chart of an antenna switching method disclosed by an embodiment of the present disclosure.

### DETAILED DESCRIPTION

In order to make those skilled in the art better understand solutions of the present disclosure, technical solutions in embodiments of the present disclosure will be described clearly and completely below in accompany with drawings in embodiments of the present disclosure. Obviously, the described embodiments are merely some embodiments of the present disclosure, but not all embodiments. Based on embodiments of the present disclosure, all other embodiments obtained by one of ordinary skill in the art without paying any creative work belong to the protection scope of the present disclosure.

The terms "first", "second", and the like in the description and claims of the present disclosure and the above-mentioned drawings are used to distinguish different objects, rather than describing a specific order. Furthermore, the terms "including" and "having", and any variations thereof are intended to cover non-exclusive inclusion. For example, a process, system, product, or device containing a series of steps or units is not limited to the listed steps or units, but optionally also includes steps or units not listed, or optionally further includes other steps or units inherent to the process, product, or equipment.

Reference to "an embodiment" herein means that particular features, structures, or characteristics described in connection with embodiments may be included in at least one embodiment of the invention. Appearances of this phrase in various places in the specification are not necessarily all referring to the same embodiment, nor are they independent or alternative embodiments that are mutually exclusive with other embodiments. It is explicitly and implicitly understood by those skilled in the art that the embodiments described herein may be combined with other embodiments.

Electronic devices involved in embodiments of the present disclosure may include various handheld devices with wireless communication functions, vehicle-mounted devices, wearable devices, computing devices, or other processing devices connected to wireless modems, and various forms of user equipments (UE), mobile stations (MS), terminal devices, and so on. For ease of description, the devices mentioned above are collectively referred to as electronic devices.

Embodiments of the present disclosure are introduced in detail below.

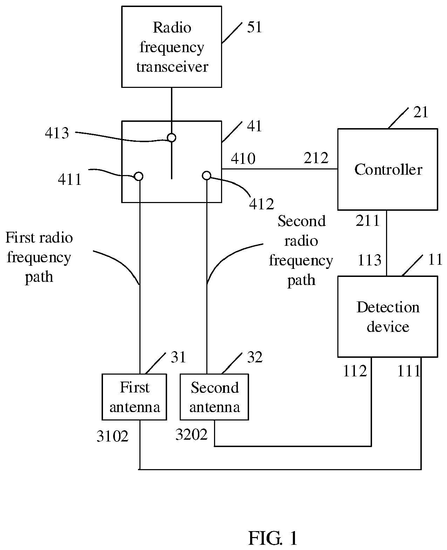

Referring to FIG. 1, FIG. 1 is a structural schematic view of an antenna switching circuit disclosed by an embodiment of the present disclosure. As shown in FIG. 1, the antenna switching circuit comprises a detection device 11, a controller 21, a first antenna 31, a second antenna 32, a first switch 41, and a radio frequency transceiver 51, wherein: the detection device 11 is configured to detect a change value of an input impedance of the first antenna 31 and a change value of an input impedance of the second antenna 32;the controller 21 is configured to compare the change value of the input impedance of the first antenna 31 with the change value of the input impedance of the second antenna 32;the first switch 41 is configured to turn on a first radio frequency path and turn off a second radio frequency path when the change value of the input impedance of the first antenna 31 is less than the change value of the input impedance of the second antenna 41, the first radio frequency path comprises a path between the first antenna 31 and the radio frequency transceiver 51, the second radio frequency path comprises a path between the second antenna 41 and the radio frequency transceiver 51.

In this embodiment of the present disclosure, the detection device 11 can collect a current and a voltage at a feeding point of the first antenna, and calculate an input impedance of the first antenna according to the current and the voltage at the feeding point of the first antenna; and can also collect a current and a voltage at a feeding point of the second antenna, and calculate an input impedance of the second antenna according to the current and the voltage at the feeding point of the second antenna.

The detection device 11 can periodically collect the input impedance of the first antenna 31 and use a difference value between input impedances collected twice as the change value of the input impedance of the first antenna 31; the detection device 11 can periodically collect the input impedance of the second antenna 32 and use a difference value between input impedances collected twice as the change value of the input impedance of the second antenna 32.

Optionally, the detection device 11 comprises a directional coupler, the directional coupler can measure reflecting powers, return losses, standing wave ratios, and so on of the first antenna 31 and the second antenna 32. If the directional coupler measures that a power transmitted from the first antenna 31 is less than a power reflected from the second antenna 32, the first switch 41 turns on the first radio frequency path and turns off the second radio frequency path; otherwise, if the directional coupler measures that a power transmitted from the first antenna 31 is larger than a power reflected from the second antenna 32, the first switch 41 turns off the first radio frequency path and turns on the second radio frequency path.

An input impedance of an antenna is related to a geometrical shape, a size, and a feeding point position of the antenna, and environmental factors. When the antenna is blocked by human organs (e.g., an arm), the input impedance of the antenna will be caused to fluctuate. The larger the fluctuation of the input impedance of the antenna, it is indicated that the more serious the impedance mismatch of the antenna is.

As shown in FIG. 1, the detection device 11 can include a first detection end 111, a second detection end 112, and an output end 113; the first detection end 111 is connected to a feeding point 311 of the first antenna 31, and the second detection end 112 is connected to a feeding point 321 of the second antenna 32. The controller 21 includes an input end 211 and a first output end 212, the input end 211 of the controller 21 is connected to the output end 113 of the detection device 11, and the first output end 212 of the controller 21 is connected to a controlling end of the first switch 41.

The first switch 41 in FIG. 1 takes a single-pole double-throw switch as an example. The first switch 41 includes a first fixed end 411, a second fixed end 412, and a free end 413.

The controller 21 is configured to compare a change value of an input impedance of the first antenna 31 and a change value of an input impedance of the second antenna 32. When the change value of the input impedance of the first antenna 31 is less than the change value of the input impedance of the first antenna 32, the first output end 212 of the controller 21 sends a first control signal to a control end 410 of the first switch 41, the first switch 41 connects the free end 413 to the first fixed end 411 in response to the first control signal, so as to achieve connection of a first radio frequency path and disconnection of a second radio frequency path. When the change value of the input impedance of the first antenna 31 is larger than the change value of the input impedance of the first antenna 32, the first output end 212 of the controller 21 sends a second control signal to the control end 410 of the first switch 41, the first switch 41 connects the free end 413 to the second fixed end 412 in response to the second control signal, so as to achieve disconnection of the first radio frequency path and connection of the second radio frequency path.

In this embodiment, the first radio frequency path is a path between the first antenna 31 and the radio frequency transceiver 51, and the second radio frequency path is a path between the second antenna 32 and the radio frequency transceiver 51. When the first radio frequency is connected, the first antenna 31 is used to communicate; when the second radio frequency is connected, the second antenna 32 is used to communicate.

The radio frequency transceiver 51 can include elements such as a radio transceiver, a power amplifier, etc., and is configured to receive and transmit radio frequency signals. When the first radio frequency path is connected, the radio frequency transceiver 51 is connected with the first antenna 31, and the radio frequency transceiver 51 can receive radio frequency signals through the first antenna 31. When the first radio frequency path is connected, the radio frequency transceiver 51 is connected with the first antenna 31, and the radio frequency transceiver 51 can receive radio frequency signals through the first antenna 31.

Optionally, the first switch 41 is further configured to turn on the second radio frequency path and turn off the first radio frequency path when the change value of the input impedance of the first antenna 31 is larger than the change value of the input impedance of the second antenna 32.

In this embodiment, the first antenna 31 and the second antenna 32 can be any one of a Time Division-Synchronous Code Division Multiple Access (TD-SCDMA) antenna, a Wideband Code Division Multiple Access (WCDMA) antenna, a Global System for Mobile Communication (GSM) antenna, and a Long Term Evolution (LTE) antenna.

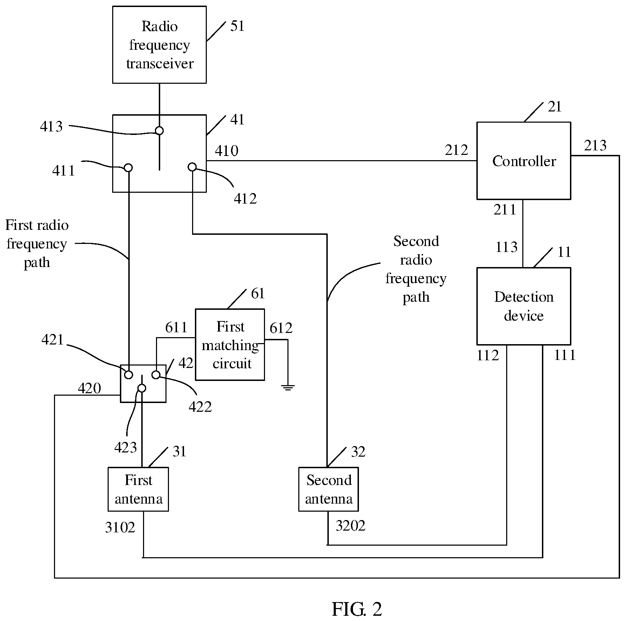

Referring to FIG. 2, FIG. 2 is a structural schematic view of another antenna switching circuit disclosed by an embodiment of the present disclosure. FIG. 2 is obtained by further optimization on the basis of FIG. 1. As shown in FIG. 2, the antenna switching circuit further comprises a second switch 42 and a first matching circuit 61, and the second switch 42 is disposed in the first radio frequency path.

The second switch 42 is configured to turn on the first radio frequency path and turn off a first matching path when the change value of the input impedance of the first antenna 31 is less than the change value of the input impedance of the second antenna 32, the first matching path includes a path between the first antenna 31 and a first matching circuit 61.

The second switch 42 is further configured to turn off the first radio frequency path and turn on a first matching path when the change value of the input impedance of the first antenna 31 is larger than the change value of the input impedance of the second antenna 32.

In this embodiment, the second switch 42 can be connected with the controller 21. In particular, the controller 21 further includes a second output end 213, the second output end 213 of the controller 21 is connected with a control end 420 of the second switch 42.

The second switch 42 in FIG. 2 takes a single-pole double-throw switch as an example. The second switch 42 includes a first fixed end 421, a second fixed end 422, and a free end 423.

The controller 21 is configured to compare the change value of an input impedance of the first antenna 31 and the change value of an input impedance of the second antenna 32. When the change value of the input impedance of the first antenna 31 is less than the change value of the input impedance of the first antenna 32, the second output end 213 of the controller 21 sends a second control signal to the control end 420 of the second switch 42, the second switch 42 connects the free end 423 to the first fixed end 421 in response to the second control signal, so as to achieve connection of the first radio frequency path and disconnection of the first matching path. When the change value of the input impedance of the first antenna 31 is larger than the change value of the input impedance of the first antenna 32, the second output end 213 of the controller 21 sends a second control signal to the control end 420 of the second switch 42, the second switch 41 connects the free end 423 to the second fixed end 422 in response to the second control signal, so as to achieve disconnection of the first radio frequency path and connection of the first matching path.

In this embodiment, the first matching path includes a path between the first antenna 31 and the first matching circuit 61. The first matching circuit 61 can include a first end 611 and a second end 612, the first end 611 is connected to the second fixed end 422 of the second switch 42, and the second end 612 is grounded.

When the first matching path is turned on, an antenna selection circuit uses the second antenna 32 to work, the first matching circuit 61 is used to provide the first antenna 31 with a return path, and the first matching circuit 61 can quickly ground signals received by the first antenna 31. This is possible to avoid the first antenna 31 from causing interference to signals received by the second antenna 32 when using the second antenna 32 to work.

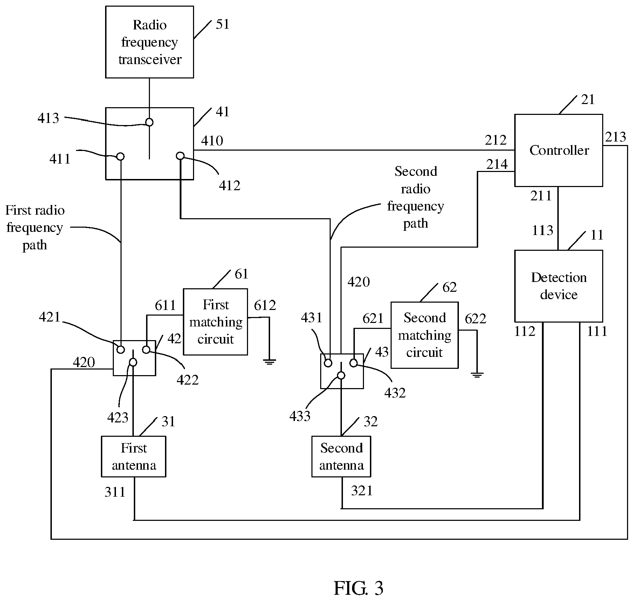

Referring to FIG. 3, FIG. 3 is a structural schematic view of another antenna switching circuit disclosed by an embodiment of the present disclosure. FIG. 3 is obtained by further optimization on the basis of FIG. 2. As shown in FIG. 3, the antenna switching circuit further comprises a third switch 43 and a second matching circuit 62, and the third switch 43 is disposed in the second radio frequency path.

The third switch 43 is configured to turn on the second radio frequency path and turn off a second matching path when the change value of the input impedance of the first antenna 31 is larger than the change value of the input impedance of the second antenna 32, the second matching path includes a path between the second antenna 32 and a second matching circuit 62.

The third switch 43 is configured to turn off the second radio frequency path and turn on the second matching path when the change value of the input impedance of the first antenna 31 is less than the change value of the input impedance of the second antenna 32.

In this embodiment, the third switch 43 can be connected with the controller 21. In particular, the controller 21 further includes a third input end 214, the third input end 214 of the controller 21 is connected with a control end 430 of the third switch 43.

The third switch 43 in FIG. 3 takes a single-pole double-throw switch as an example. The third switch 43 includes a first fixed end 431, a second fixed end 432, and a free end 433.

In the embodiment shown in FIG. 3, the controller 21 is configured to compare the change value of an input impedance of the first antenna 31 and the change value of an input impedance of the second antenna 32. When the change value of the input impedance of the first antenna 31 is less than the change value of the input impedance of the first antenna 32, the third output end 214 of the controller 21 sends a third control signal to the control end 430 of the third switch 43, the third switch 43 connects the free end 433 to the first fixed end 431 in response to the third control signal, so as to achieve connection of the second radio frequency path and disconnection of the second matching path. When the change value of the input impedance of the first antenna 31 is larger than the change value of the input impedance of the first antenna 32, the third output end 214 of the controller 21 sends a third control signal to the control end 430 of the third switch 43, the third switch 43 connects the free end 433 to the second fixed end 432 in response to the third control signal, so as to achieve disconnection of the second radio frequency path and connection of the second matching path.

In this embodiment, the second matching path includes a path between the second antenna 32 and the second matching circuit 62. The second matching circuit 62 can include a first end 621 and a second end 622, the first end 621 is connected to the second fixed end 432 of the third switch 43, and the second end 622 is grounded.

When the second matching path is turned on, an antenna selection circuit uses the first antenna 31 to work, the second matching circuit 62 is used to provide the second antenna 32 with a return path, and the second matching circuit 62 can quickly ground signals received by the second antenna 32. This is possible to avoid the second antenna 32 from causing interference to signals received by the first antenna 31 when using the first antenna 31 to work.

Optionally, the antenna switching circuit further comprises a first frequency adjustment module 71, the first frequency adjustment module is connected in the first radio frequency path in series, wherein the first frequency adjustment module includes a first capacitor C1.

Optionally, the antenna switching circuit further comprises a second frequency adjustment module, the second frequency adjustment module is connected in the second radio frequency path in series, wherein the second frequency adjustment module includes a second capacitor C2.

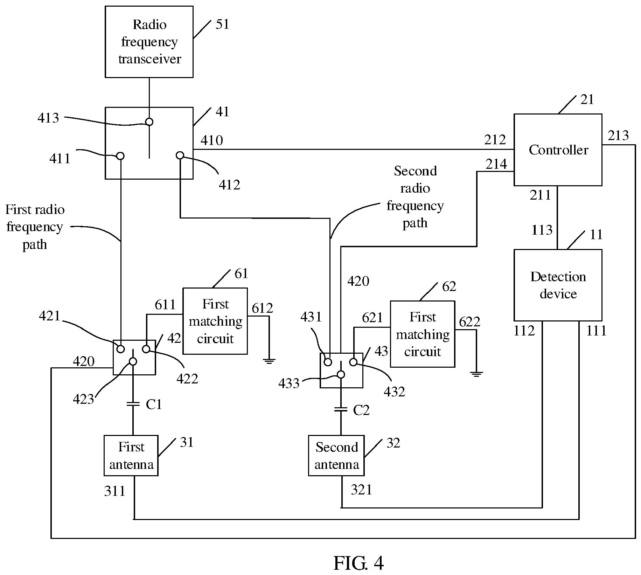

Referring to FIG. 4, the first frequency adjustment module 71 is configured to adjust a working frequency of the first antenna 31, the second frequency adjustment module 72 is configured to adjust a working frequency of the second antenna 32. For example, when the antenna 31 or the antenna 32 needs to emit a signal at a low frequency (e.g., 900MHz), it is possible to lower a working frequency of the antenna 31 or the antenna 32 by adding the first capacitor C1 or the second capacitor C2.

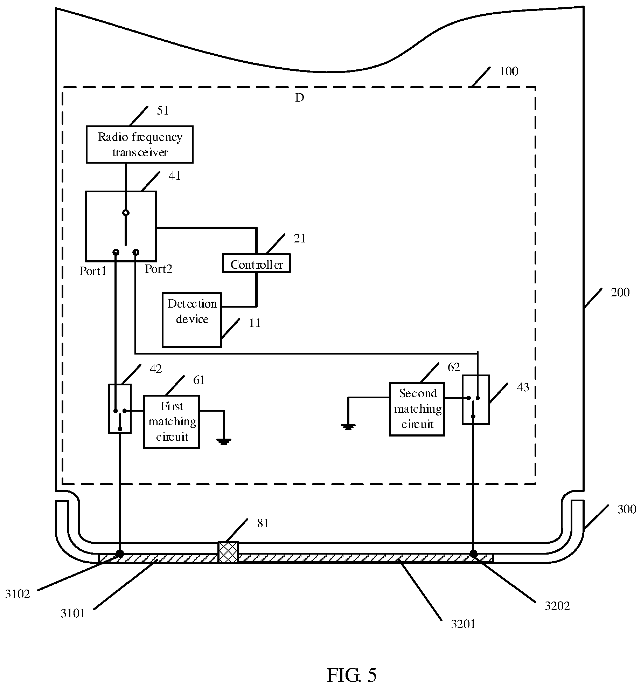

Referring to FIG 5, FIG 5 is a structural schematic view of an electronic device disclosed by an embodiment of the present disclosure. As shown in FIG. 5, the electronic device 10 comprises a frame 300, a circuit board 200, and an antenna switching circuit 100, the antenna switching circuit 100 includes any one shown in FIGS. 1-4. The antenna switching circuit 100 is fixed on the circuit board.

The antenna switching circuit 100 comprises a detection device 11, a controller 21, a first antenna 31, a second antenna 32, a first switch 41, and a radio frequency transceiver 51. As shown in FIG. 5, the antenna switching circuit 100 can further comprise a second switch 42, a third switch 43, a first matching circuit 61, a second matching circuit 62.

In this embodiment, the first antenna 31 includes a first antenna radiator 3101, the first antenna radiator 3101 is disposed on the frame 300. In particular, it is possible to use a portion of the frame 300 as the first antenna radiator 3101. As shown in FIG. 5, a left portion of the frame 300 is used as the first antenna radiator 3101. The first antenna 31 can further include a first feeding point 3102, the first feeding point 3102 is configured to transmit signals sent from the radio frequency transceiver 51 to the first antenna radiator 3101, and configured to transmit signals received by the first antenna radiator 3101 to the radio frequency transceiver 51.

In this embodiment, the second antenna 32 includes a second antenna radiator 3201, the second antenna radiator 3201 is disposed on the frame 300. In particular, it is possible to use a portion of the frame 300 as the second antenna radiator 3201. As shown in FIG. 5, a right portion of the frame 300 is used as the second antenna radiator 3201.

The second antenna 32 can further include a second feeding point 3202,the second feeding point 3202 is configured to transmit signals sent from the radio frequency transceiver 51 to the second antenna radiator 3201, and configured to transmit signals received by the second antenna radiator 3201 to the radio frequency transceiver 51.

The first antenna radiator 3101 is isolated from the second antenna radiator 3201 by a metal isolation element 81, and the metal isolation element 81 is grounded. The metal isolation element 81 is configured to isolate the first antenna radiator 3101 from the second antenna radiator 3201, and avoid interference between signals received and sent by the first antenna radiator 3101 and signals received and sent by the second antenna radiator 3201.

Wherein, the first antenna radiator 3101 and the second antenna radiator 3201 are disposed at the same side of the frame 300.

As shown in FIG. 5, the first antenna radiator 3101 and the second antenna radiator 3201 are disposed at a lower end of the frame 300. If the electronic device 10 takes a mobile phone as an example, the first antenna radiator 3101 and the second antenna radiator 3201 can be disposed at a lower frame of the mobile phone. When an holder of the electronic 10 holds the mobile phone to call, disposing the antenna radiators at the lower frame of the mobile phone can reduce radiation from the antenna radiators to a human body in comparison to disposing the antenna radiators at an upper frame of the mobile phone. Furthermore, in this embodiment of the present disclosure, since the first antenna radiator 3101 and the second antenna radiator 3201 are respectively disposed at left and right sides of the lower frame of the mobile phone, when a user holds a lower portion of the mobile phone with a left hand, an input impedance of the first antenna 31 is caused to change, and signal reception and transmission of the first antenna radiator 3101 may be affected; when a user holds a lower portion of the mobile phone with a right hand, an input impedance of the second antenna 32 is caused to change, and signal reception and transmission of the first antenna radiator 3201 may be affected; thus, working performance of the antennas may be affected. In embodiments of the present disclosure, a change value of an input impedance of the first antenna 31 and a change value of an input impedance of the second antenna 32 are detected by the detection device 11, and the change value of the input impedance of the first antenna 31 is compared with the change value of the input impedance of the second antenna 32 by the controller 21; when the change value of the input impedance of the first antenna 31 is less than the change value of the input impedance of the second antenna 32, the first switch 41 turns on a first radio frequency path and turns off a second radio frequency path, so that the first antenna 31 works; when the change value of the input impedance of the first antenna 31 is larger than the change value of the input impedance of the second antenna 32, the first switch 41 turns off the first radio frequency path and turns on the second radio frequency path, so that the second antenna 32 works. It is possible to switch a currently working antenna to an antenna with higher performance according to the changes of impedances of antennas, and thus performance of a working antenna can be improved.

Disposing the first antenna radiator 3101 and the second antenna radiator 3201 at left and right sides of a lower frame of a mobile phone respectively can be suitable for a minimum clearance condition. For instance, taking a full-screen mobile phone as an example, since a screen of the full-screen mobile phone occupies very large space, clearance space of antennas is very small. In this embodiment of the present disclosure, the first antenna radiator 3101 and the second antenna radiator 3201 are respectively disposed at left and right sides of a lower frame of a mobile phone, space of side frames of the mobile phone are not required to be occupied, and antenna switching in a full-screen mobile phone can be met.

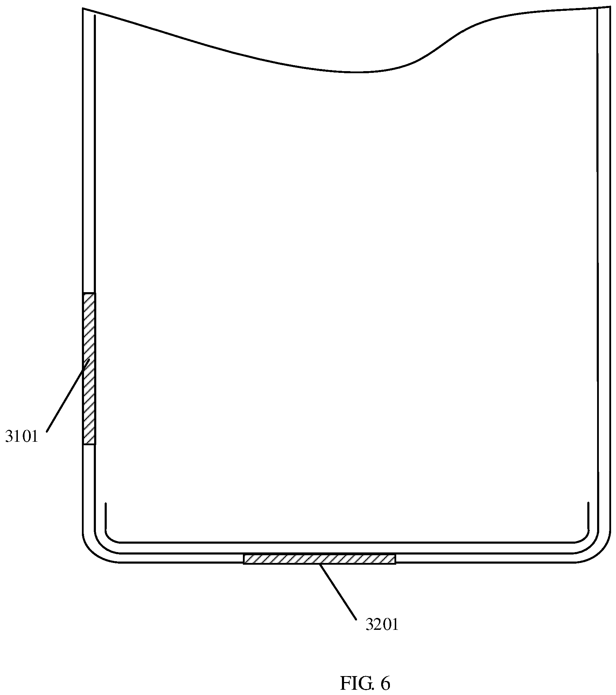

Optionally, as shown in FIG. 6, the first antenna radiator 3101 and the second antenna radiator 3201 are disposed at two adjacent sides of the frame 300.

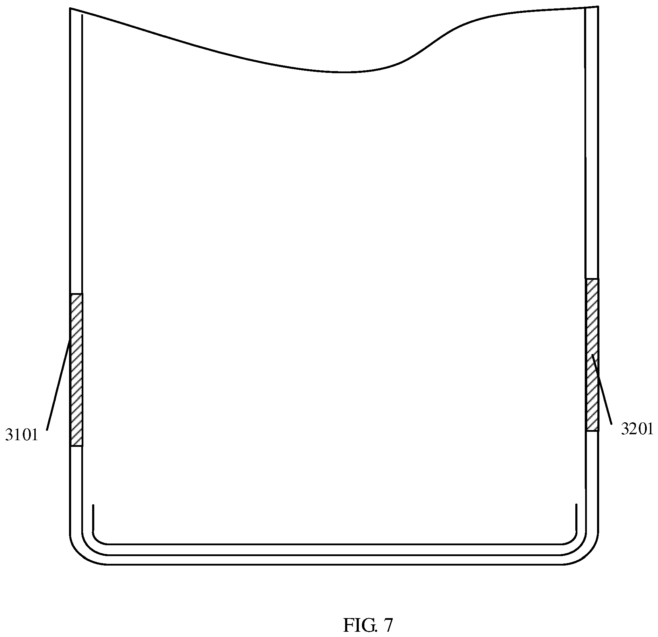

Optionally, as shown in FIG. 7, the first antenna radiator 3101 and the second antenna radiator 3201 are disposed at two opposite sides of the frame 300.

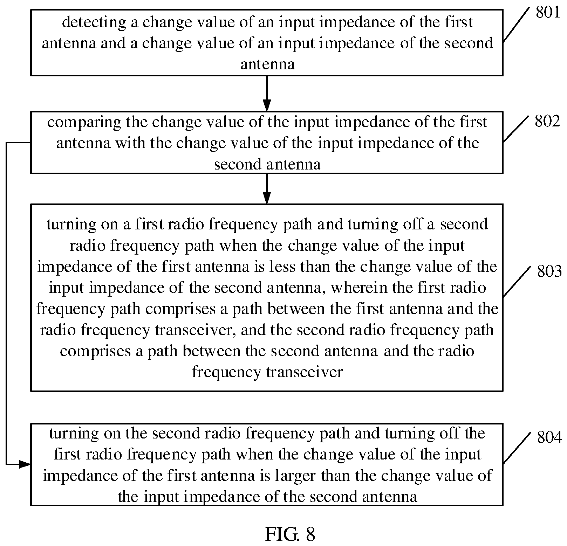

Referring to FIG. 8, FIG. 8 is a schematic flow chart of an antenna switching method disclosed by an embodiment of the present disclosure. As shown in FIG. 8, the method is applied to an antenna switching circuit, the antenna switching circuit comprises a detection device 11, a controller 21, a first antenna 31, a second antenna 41, a first switch 42, and a radio frequency transceiver 51; the antenna switching method comprises the following steps: 801, detecting a change value of an input impedance of the first antenna and a change value of an input impedance of the second antenna; 802, comparing the change value of the input impedance of the first antenna with the change value of the input impedance of the second antenna; 803, turning on a first radio frequency path and turning off a second radio frequency path when the change value of the input impedance of the first antenna is less than the change value of the input impedance of the second antenna, wherein the first radio frequency path comprises a path between the first antenna and the radio frequency transceiver, and the second radio frequency path comprises a path between the second antenna and the radio frequency transceiver. 804, turning on the second radio frequency path and turning off the first radio frequency path when the change value of the input impedance of the first antenna is larger than the change value of the input impedance of the second antenna.

Implementation of the method shown in FIG. 8 can specifically refer to the antenna switching circuits shown in FIGS. 1-4, and is not repeated here.

By implementing the method shown in FIG. 8, it is possible to switch a currently working antenna to an antenna with higher performance according to the changes of impedances of antennas, and thus performance of a working antenna can be improved.

In the several embodiments provided by this application, it should be understood that the disclosed devices may be implemented in other ways. For example, the device embodiments described above are only schematic. For example, the division of the units is only a logical function division; in actual implementation, there may be another division manner. For example, multiple units or components may be combined or integrated into another system, or some features can be ignored or not implemented. In addition, the displayed or discussed mutual coupling, direct coupling, or communication connection may be indirect coupling or communication connection through some interfaces, devices or units, and may be electrical or in other forms.

The units described as separate components may or may not be physically separated, and the components displayed as units may or may not be physical units, that is, may be located in one place, or may also be distributed on multiple network units. Some or all of the units may be selected according to actual needs to achieve the objects of the solutions of these embodiments.

The embodiments of the present disclosure have been described in detail above. Specific examples have been used herein to explain the principles and implementation of the present disclosure. The description of the above embodiments is only to help understand the core idea of the present disclosure; at the same time, for one of ordinary skill in the art, according to the idea of the present disclosure, there will be changes in the specific implementation and the application scope. In summary, the content of this description should not be understood as any limitation to the present disclosure.

## Claims

1. An antenna switching circuit applied to an electronic device and comprising a detection device, a controller, a first antenna, a second antenna, a first switch, and a radio frequency transceiver; wherein:
the detection device is configured to detect a change value of an input impedance of the first antenna and a change value of an input impedance of the second antenna;
the controller is configured to compare the change value of the input impedance of the first antenna with the change value of the input impedance of the second antenna;
the first switch is configured to turn on a first radio frequency path and turn off a second radio frequency path when the change value of the input impedance of the first antenna is less than the change value of the input impedance of the second antenna, the first radio frequency path comprises a path between the first antenna and the radio frequency transceiver, the second radio frequency path comprises a path between the second antenna and the radio frequency transceiver.

2. The antenna switching circuit according to claim 1, wherein, the first switch is further configured to turn on the second radio frequency path and turn off the first radio frequency path when the change value of the input impedance of the first antenna is larger than the change value of the input impedance of the second antenna.

3. The antenna switching circuit according to claim 1, wherein, the antenna switching circuit further comprises a second switch and a first matching circuit, and the second switch is disposed in the first radio frequency path;
the second switch is configured to turn on the first radio frequency path and turn off a first matching path when the change value of the input impedance of the first antenna is less than the change value of the input impedance of the second antenna, the first matching path includes a path between the first antenna and a first matching circuit.

4. The antenna switching circuit according to claim 3, wherein, the second switch is further configured to turn off the first radio frequency path and turn on the first matching path when the change value of the input impedance of the first antenna is larger than the change value of the input impedance of the second antenna.

5. The antenna switching circuit according to any one of claims 2-4, wherein, the antenna switching circuit further comprises a third switch and a second matching circuit, and the third switch is disposed in the second radio frequency path;
the third switch is configured to turn on the second radio frequency path and turn off a second matching path when the change value of the input impedance of the first antenna is larger than the change value of the input impedance of the second antenna, the second matching path includes a path between the second antenna and a second matching circuit.

6. The antenna switching circuit according to claim 5, wherein, the third switch is configured to turn off the second radio frequency path and turn on the second matching path when the change value of the input impedance of the first antenna is less than the change value of the input impedance of the second antenna.

7. The antenna switching circuit according to any one of claims 1-6, wherein, the antenna switching circuit further comprises a first frequency adjustment module, the first frequency adjustment module is connected in the first radio frequency path in series.

8. The antenna switching circuit according to claim 6, wherein, the first frequency adjustment module includes a first capacitor.

9. The antenna switching circuit according to any one of claims 1-8, wherein, the antenna switching circuit further comprises a second frequency adjustment module, the second frequency adjustment module is connected in the second radio frequency path in series.

10. The antenna switching circuit according to claim 9, wherein, the second frequency adjustment module includes a second capacitor.

11. The antenna switching circuit according to any one of claims 5-10, wherein, the first switch includes a single-pole double-throw switch, the second switch includes a single-pole double-throw switch, the third switch includes a single-pole double-throw switch.

12. The antenna switching circuit according to any one of claims 1-11, wherein, the detection device comprises a directional coupler.

13. An antenna switching method, wherein, the antenna switching method is applied to an antenna switching circuit, the antenna switching circuit comprises a detection device, a controller, a first antenna, a second antenna, a first switch, and a radio frequency transceiver; the method comprises:
detecting a change value of an input impedance of the first antenna and a change value of an input impedance of the second antenna;
comparing the change value of the input impedance of the first antenna with the change value of the input impedance of the second antenna;
turning on a first radio frequency path and turning off a second radio frequency path when the change value of the input impedance of the first antenna is less than the change value of the input impedance of the second antenna, wherein the first radio frequency path comprises a path between the first antenna and the radio frequency transceiver, and the second radio frequency path comprises a path between the second antenna and the radio frequency transceiver.

14. The method according to claim 13, wherein, the second radio frequency path is turned on and the first radio frequency path is turned off when the change value of the input impedance of the first antenna is larger than the change value of the input impedance of the second antenna.

15. An electronic device, comprising a frame, a circuit board, and an antenna switching circuit; wherein, the antenna switching circuit comprises a detection device, a controller, a first antenna, a second antenna, a first switch, and a radio frequency transceiver; the antenna switching circuit is fixed on the circuit board.

16. The electronic device according to claim 15, wherein, the first antenna includes a first antenna radiator, the first antenna radiator is disposed on the frame.

17. The electronic device according to claim 16, wherein, the second antenna includes a second antenna radiator, the second antenna radiator is disposed on the frame, the first antenna radiator is isolated from the second antenna radiator by a metal isolation element, and the metal isolation element is grounded.

18. The electronic device according to claim 17, wherein, the first antenna radiator and the second antenna radiator are disposed at the same side of the frame.

19. The electronic device according to claim 17, wherein, the first antenna radiator and the second antenna radiator are disposed at two adjacent sides of the frame.

20. The electronic device according to claim 17, wherein, the first antenna radiator and the second antenna radiator are disposed at two opposite sides of the frame.
